# EUROPEAN PATENT SPECIFICATION

(11) **EP 2 151 472 B1**
(45) Date of publication and mention of the grant of the patent: **29.12.2010**
(21) Application number: 08013526.2
(22) Date of filing: 28.07.2008
(51) Int. Cl.: C08K 3/22, C08L 67/02

(54) **Resin composition for food containers**
Harzzusammensetzung für Lebensmittelbehälter
Composition de résine pour récipients alimentaires

(43) Date of publication of application: 10.02.2010
(73) Proprietor: SOCIEDAD ANONIMA MINERA CATALANO-ARAGONESA (SAMCA), 50001 Zaragoza (ES)
(72) Inventor: Leza Roa, Fortun, 50001 Zaragoza (ES); Bergegal Lapresta, Luisa, 50001 Zaragoza (ES); Sánchez de Andrés, Alberto, 50001 Zaragoza (ES); Caballero López, Miguel Angel, 50001 Zaragoza (ES)
(74) Representative: Schäfer, Matthias W.

(56) References cited:
- WO-A-2005/040261
- WO-A-2007/129893

## Description

### Technical background

The requirements for food containers are constantly increasing. For example, the consumers' awareness of health aspects is significantly growing. Thus, such health aspects are to be intensely considered when selecting the materials used for food containers, further taking the varying national requirements into account. Furthermore, airtightness is often required so as to avoid e.g. a rapid oxidization of the packaged food or the de-gassing of carbonated beverages.

Additionally, as regards for example dairy products, it is necessary to shield the food from detrimental light irradiation visible and ultra-violet region (UV), respectively. Specially Critical is the visible light having a wavelength below 550nm that promote the photo oxidation of vitamins like riboflavin or amino acids like methionine and adversely affects the flavor of dairy products. When resin materials are used for packing foods, a usual measure for achieving a better light-shielding property resides in the addition of light reflecting and/or absorbing agents to the resin material, for example inorganic pigments. One of the inorganic pigments useful in this regard is titanium oxide, as can be seen e.g. from WO 03/064267 A2, WO 01/55261 A2, JP 04173134 A, US 4,051,265 A, WO 03/076277 and EP 1 737 755 B1. In these documents, the manufacture of mono-layered polyester containers is described, wherein titanium oxide is employed as an opacifying mineral filler by reflecting effect so as to reduce the light transmission factor of the produced article.

Besides titanium oxide, other pigments are generally added as well. For example, JP 04114057 A describes a polyester composition which is useful for blow-molded bottles and which contains a light reflecting pigment like titanium white, a light absorbing agent like carbon black and, a colour corrector like iron oxide (Fe2O2) . This pigment combination is intended to achieve acceptable light shielding properties.

As regards these light shielding properties of resin compositions to be used for food containers, there is still room for improvement, especially in view of good shielding properties within the entire visible light region plus the UV-regions.

Additionally, the color of the containers is also to be considered since several of the typically employed ingredients for altering the light-shielding properties tend to darken the container material, and sometimes black spots are formed in the polymeric matrix. Such a darkening is an aesthetic disadvantage. Thus, an improvement of the whiteness of the employed materials is desired.

Further, there is also a demand for an improved match between the used light reflecting/absorbing pigments and the resin matrix. This is because not only the transmission characteristics, but also the mechanical and chemical properties of the resin matrix are influenced and sometimes degraded by the pigments.

Apart from the aspect of a sufficient light shielding, properties of the final product as well as manufacturing aspects are also important for food containers. Namely, a suitable balance between stiffness and flexibility, good handling properties of the employed raw materials, a proper processability which allows a rapid and comparably cheap mass production, etc. should be provided.

Accordingly, it is an object of the present invention to provide a resin composition which can be used in the production of food containers and which leads to better light absorbing and reflecting characteristics for all relevant wavelength regions. Further, the balance between stiffness and flexibility, the handling properties and the processability of this resin composition shall be improved at the same time. Also, an improved color of the resin composition is a further objective of the present invention.

### Summary

In order to solve the above object, the present invention provides a resin composition which comprises polyethylene terephthalate, titanium oxide and iron oxide, wherein the weight ratio of the titanium oxide to the iron oxide is in the range of 150 to 250.

In a preferred embodiment, the content of the titanium oxide is 2 to 11 wt.%, based on the total weight of the composition. A preferred content of the iron oxide is 0.01 to 0,07 wt.%, based on the total weight of the composition.

It is further preferable that the iron oxide is Fe₃O₄.

According to a further preferred embodiment, the resin composition have a granular form.

Advantageously, the resin composition of the present invention is obtained by polymerization process.

The present invention also provides a preform of a food container, preferably a bottle, which comprises the resin composition of the present invention.

With the resin according to the present invention, bottles, preferably mono-layered bottles, or other containers can be obtained.

The use of a container which comprises the resin composition of the present invention for packaging light-sensitive goods is especially advantageous for food products, especially for milk or dairy products.

A bottle comprising the above mentioned resin composition which exhibits, at a wall thickness from o,22 mm up to 0,35 mm and at a wavelength of 550 nm, a transmission factor of ≤0.5% of the irradiated light, as measured in the integrated sphere mode, can thus be obtained.

A process for manufacturing a resin composition comprising polyethylene terephthalate, titanium oxide and iron oxide comprises the steps of:
i) esterifying terephthalic acid and ethylene glycol;
ii) adding titanium oxide and iron oxide;
iii) polymerizing the resulting reaction mixture;
iv) pelletizing the polymerized reaction mixture; and
v) increasing the molecular weight of the resulting resin in a further solid state polycondensation (SSP) process.

### Brief description of the drawings

Fig. 1 shows a comparison of transmittance ratios of four different resin compositions with a constant titanium oxide concentration and an increasing iron oxide concentration.
Fig. 2 shows transmittance values for different pigment concentrations and for a constant weight ratio TiO2 / Fe304 = 225, in the wavelength range of 400 to 700 nm.
Fig. 3 compares the transmittance at 550 nm of two different groups of sample types, one with titanium oxide alone at different concentrations, and one with a combination of titanium oxide and iron oxide with a weight relation ratio Ti02 / iron oxide = 225 at different absolutes pigments contents.
Fig. 4 compares the transmittance of two samples, one with titanium oxide alone (7% by weight) and one with a combination of titanium oxide (4% by weight) and iron oxide, in the wavelength range of 400 to 700 nm.
Fig. 5 compares the transmittance of two samples, one theoretical sample with titanium oxide alone (using the fig 3 equation) and one with a combination of titanium oxide and iron oxide, in the wavelength range of 400 to 700 nm.
Fig. 6 shows the workflow of a process for producing the resin composition of the present invention.
Fig. 7 describes the production of a slurry of titanium oxide in ethylene glycol.
Fig. 8 describes the production of a slurry of iron oxide in ethylene glycol.

### Description of the preferred embodiments

As mentioned above, the present invention is concerned with a resin composition which comprises polyethylene terephthalate, titanium oxide and iron oxide, with a weight ratio of the titanium oxide to the iron oxide of 150 to 250.

Apart from specific advantages of the different features and feature combinations of the composition according to the present invention, which are discussed in detail hereinafter, it shall be mentioned that an improved dispersibility of the pigments and possible additives and no agglomeration or clumping in suspension are observed for the above recited composition.

The matrix of the resin composition essentially comprises polyethylene terephthalate (PET). This is because PET can be easily formed into the desired shape by molding techniques like injection molding, preform blowing, injection-blowing, compression molding, extrusion blowing, etc., thus exhibiting a superior processability. The resulting containers also achieve a suitable balance between stiffness and flexibility.

Simultaneously, PET allows the incorporation of titanium oxide pigments and iron oxide pigments in the desired amounts and ratios, wherein an improved dispersion of these pigments in the polymer matrix is obtained so as to achieve homogeneous light-transmission properties.

Accordingly, the present invention employs a resin composition comprising PET. For modifying the chemical and mechanical properties of articles made of the composition, other polymers can be added as co-polymers. Also, the employed PET can be chemically modified.

However, due to its very good match with the used pigments, PET is preferably the principal ingredient of the resin composition. That is, the content of PET in the composition is preferably 88 wt.% or more, more preferably 90 wt.% or more. Depending on the amount of added pigments, the upper limit of the PET content can be e.g. 95 wt.% or even more. However, higher and lower upper limits of the PET content are of course also possible, as long as the inventive pigment ratio is realized.

In the present invention, titanium oxide, preferably TiO₂ in the anatase or rutile crystal form, is used as one of the pigments, i.e. as a light-reflecting agent. Titanium oxide is used because the whiteness of containers made of the resin composition can be easily controlled with this pigment. Further, titanium oxide has high barrier properties at short wavelengths (below 380 nm), great reflecting properties and is innocuous in food applications. Also, titanium oxide is highly dispersible in the PET-containing resin matrix, with no interferences in polymerization processes.

Furthermore, the titanium oxide acts cooperatively with the second pigment, iron oxide. This is because the dispersion of light, upon irradiating light onto the titanium oxide particles, can be used to achieve synergistic effects when light absorbing particles, which are conveniently dispersed in the polymeric matrix, are used in combination.

Iron oxide is used as the second pigment which is selected from several possible absorbing agents (frequently, active C or carbon black have been used) for the following reasons: it allows to get adequate cromatic coordinates in a three-dimensional color space (Cie-L*a*b* scale) better than C which darkens the final look. Further, it keeps a high specific light absorption ability at the critical wavelength of 550 nm. Essays using as an absorbing agent C-derivates have shown suitable absorption abilities, but also black points by agglomerations. There is a significant risk of degradation of the color L* (cromatic coordinate which indicates white) and b* (chromatic coordinate which indicates yellow) when the final concentration of C is slightly altered.

These drawbacks of especially C-based absorbing agents are overcome by the combined use of iron oxide in addition to titanium oxide. Generally, water-free Fe^{III}-oxide (Fe₂O₃) and mixed Fe^{II}Fe^{III}-oxide (Fe₃O₄) can be used.

However, it has turned out that Fe₃O₄, as a mineral also known as magnetite, shows a far less tendency to agglomerate so that it consequently leads to a better dispersion of the absorbing pigment in the matrix. As mentioned above, a high degree of the dispersion of the absorbing pigment leads to the synergistic effect when titanium oxide is used as a reflecting pigment. Also, Fe₃O₄ absorbs more light in the visible light spectrum than other iron oxide pigments. Additionally, Fe₃O₄ is better dispersible in the resin matrix than e.g. carbon black and does also not form agglomerates during a polymerization process, while carbon black shows a significant tendency to agglomerate. Moreover, in the context of the use of the present composition for food containers, the slightly yellowish tone imparted by the Fe₃O₄ is preferred to the bluish tone resulting from carbon black. The following Table 1 compares samples (actual bottles) with two different pigment combinations (titanium oxide/carbon black vs. titanium oxide/iron oxide). Transmittance at 550 nm has been measured in bottles walls of 0,25 mm of thickness.

**Table 1**

| | TiO₂ (wt.%) | Carbon black (ppm) | Fe₃O₄ (ppm) | T ₅₅₀ₙₘ (%) | Color L* / a* / b* |
|---|---|---|---|---|---|
| A1 | 9 | | 400 | 0.08 | 88.8 / -0.5 / 1.5 |
| C1 | 9 | 120 | | 0.08 | 88.7 / -1.1 / - 0.2 |

As can be seen from Table 1, for a comparable light barrier and L* value of the color, Fe₃O₄ has only a slight yellowish tone, while carbon black leads to a bluish appearance as indicated by the lower b* value (a yellowish tone, corresponding at positive b* coordinate, is preferred).

In view of the foregoing, the most preferred absorbing pigment according to the present invention is Fe₃O₄.

A further reason for the preferred use of Fe₃O₄ is its high absorption of light in the IR-region, which is superior to those of other iron oxides. Blowing standard machines employ IR radiation in order to heat the performs before blowing. The preforms referred to in this specification can be advantageously heated and blowed in an oven in which they are irradiated with IR-light. When the iron oxide pigment in the resin composition is then Fe₃O₄, the heating time in the oven can be shortened, thus improving the throughput of the manufacturing process and reducing the energy consumption. It has also turned out that the heat-distribution in e.g. an IR-heated preform is more uniform when Fe₃O₄ is employed, which eventually results in also more uniform blowing process and better product characteristics.

In order to securely achieve improved light-blocking properties of packaging materials made of the inventive composition as well as an improved whiteness thereof, the weight ratio of the at least two pigments used in the composition according to the invention, i.e. the weight ratio of titanium oxide/iron oxide, is in the range of 150 to 250.

Within the defined range, the advantageous effects of the present invention are achieved inter alia for the following reasons. Firstly, titanium oxide is a white reflecting pigment. Both, the light barrier and the whiteness of the composition and of articles made thereof, especially the aforementioned preform and bottles, respectively, increase with an increasing titanium oxide content. For such containers to be made of the inventive resin composition, a high degree of whiteness is desired for aesthetical reasons. On the other hand, titanium oxide is comparably expensive and a high content thereof might lead to a poorer processability, e.g. in injection and blowing process.

Secondly, iron oxide is a black absorbing pigment, so that an increasing content of this pigment leads to a stronger light barrier, but also enhances the darkness of the composition, or of containers made thereof (preform, bottles, etc.). The darkening is less desirable for the abovementioned reasons.

In principle, the addition of iron oxide allows to reduce the weight percentage of the titanium oxide, while maintaining the same light barrier performance. However, an extensive addition of iron oxide would lower the whiteness of the composition below an acceptable level. Practically, the composition and articles made of the composition preferably have an L*-value of ≥ 88 and b*-value of > 0.

It has now been surprisingly found that for a resin composition comprising PET, a simultaneous optimization of light barrier performance and whiteness of the composition as well as of its processability and its costs can be achieved by a weight ratio of titanium oxide/iron oxide within the range of 150 to 250.

The following Table 2 shows the results for the transmission rates at a wavelength of 550 nm and the coordinates in the three-dimensional color space for four actually produced containers (bottles wall thickness = 0,25 mm):

**Table 2**

| | TiO₂ (wt.%) | Fe₃O₄ (ppm) | T ₅₅₀ₙₘ (%) | Color L* / a* / b* |
|---|---|---|---|---|
| C2 | 9 | 0 | 2.6 | 94.5 / -1.3 / 3.7 |
| C3 | 9 | 200 | 1.13 | 92.0 / -1.0 / 2.8 |
| A1 | 9 | 400 | 0.08 | 88.8 / -0.5 / 1.5 |
| C4 | 9 | 700 | 0.06 | 86.5 / -0.4 / 0.4 |

Table 2 shows the light barrier properties and the colors of bottles with different amounts of iron oxide. It becomes apparent that the barrier properties improve with an increasing iron oxide content, while at low iron oxide contents, the transmission properties are not satisfactory. The color is also affected, i.e. the L* value (whiteness) is lowered with the increasing iron oxide content. Increasing the level of iron oxide from 400 to 700 ppm does further not lead to a remarkable improvement of the light barrier properties, but results in a disadvantageous decrease of the L* value below the acceptable level of 88. Actually, the sample with the pigment weight ratio according to the present invention (sample A1) shows the best balance of light barrier properties and color.

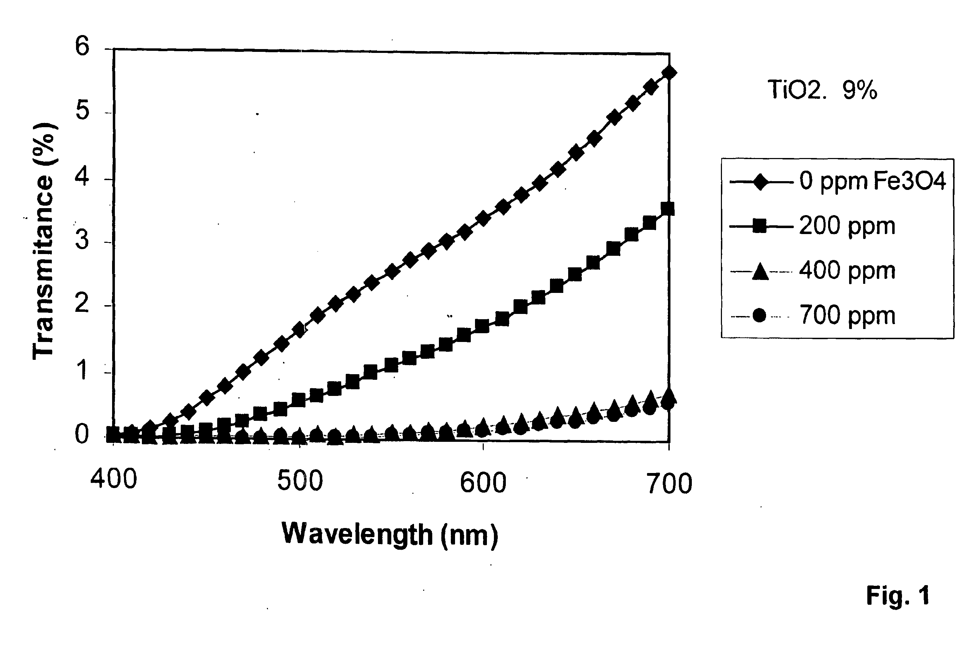

The results for the wavelength of 550 nm can be generalized for the whole wavelength spectrum from about 400 nm to 700 nm, as it becomes apparent from the measurements which are shown in Fig. 1.

The abovementioned weight ratio is preferably in the range of 155 to 245, more preferably in the range of 160 to 240, still more preferably in the range of 165 to 235, wherein the achieved effect is increasing accordingly. Even better results are obtained at the further preferred weight ratios of 170 to 230. The most preferred weight ratio is in the range of 222 to 228.

The following Table 3 compares the light barrier and color properties of two further bottles (wall thickness = 0,25 mm) which have different concentrations of the titanium oxide and the iron oxide pigment, respectively, but in which the same weight ratio of titanium oxide/iron oxide of 225 is maintained:

**Table 3**

| | TiO₂ (wt.%) | Fe₃O₄ (ppm) | T ₅₅₀ₙₘ (%) | Color L* / a* / b* |
|---|---|---|---|---|
| A1 | 9 | 400 | 0.08 | 88.8 / -0.5 / 1.5 |
| C5 | 4 | 178 | 2.33 | 88.8 / -0.5 / 1.8 |

The lowering of the concentrations of the two pigments leads to a somewhat reduced.light barrier, but there is no change of color. This demonstrates that keeping the ratio of the two pigments constantly within the range defined by the present invention allows to produce acceptable bottles with the highest possible barrier at the minimum amount of titanium oxide. This examples clearly supports the advantageous balance of properties as realized by the inventive pigment ratio.

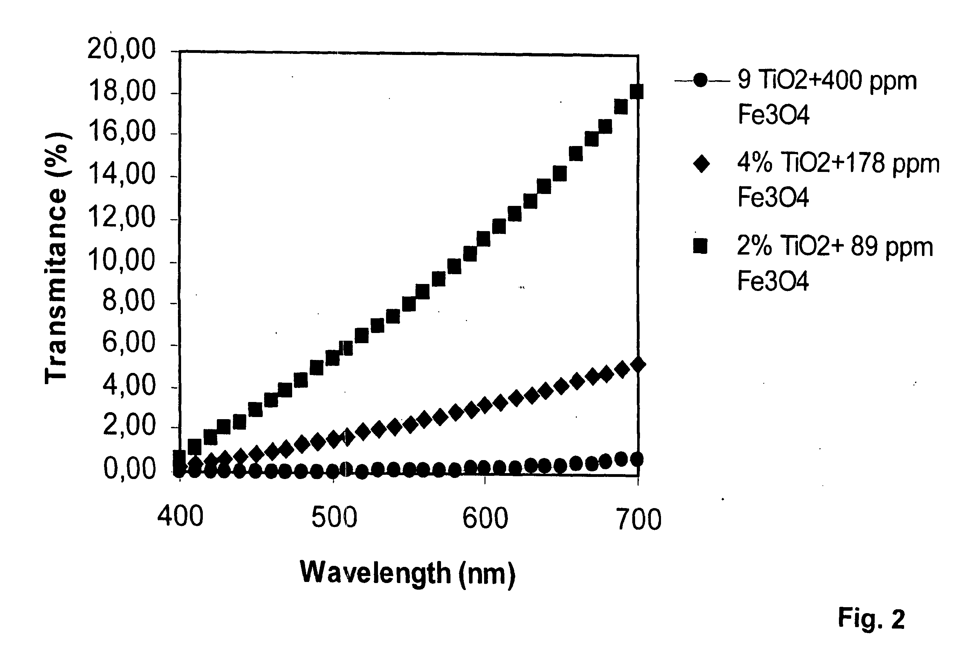

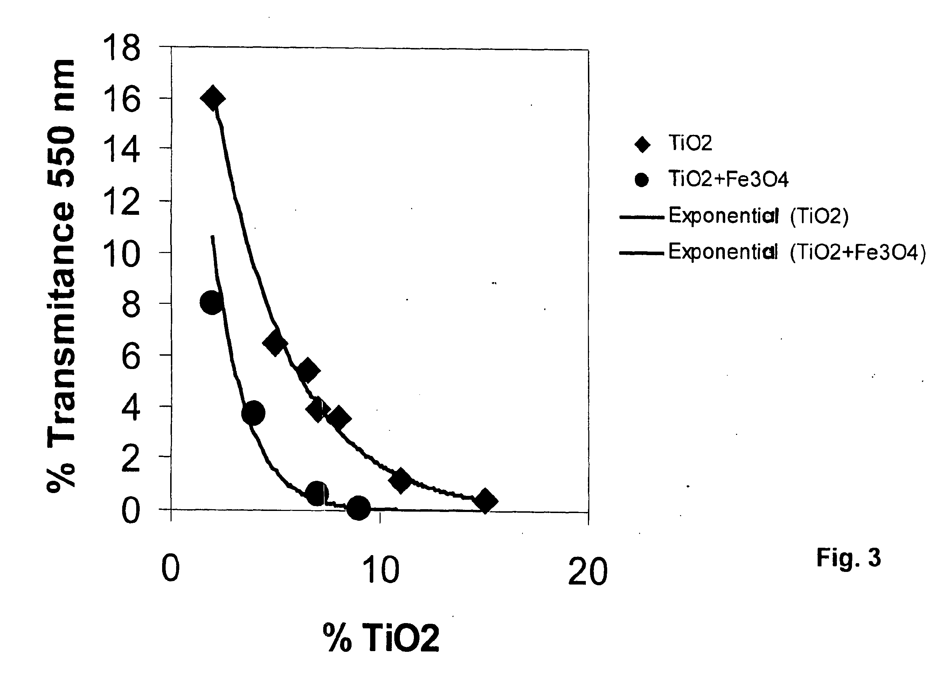

The above results are confirmed by the data shown in Fig. 2 and 3. In Fig. 2, the effect of the addition of iron oxide to the titanium oxide over the wavelength range of 400 to 700 nm is shown for a constant weight ratio of 225/1. Further, Fig. 3 shows the transmittance at 550 nm vs. the TiO₂ concentration for a group of samples (bottles) with just titanium dioxide as a pigment (diamonds) and for a group of samples containing TiO₂ and Fe₃O₄ (circles). The experimentally obtained points are adjusted by an exponential "tendency line" which is calculated according to the equation shown in Fig. 3. In this equation, "y" represents the transmittance at 550 nm, x represents the concentration of TiO₂ and R2 is a correlation coefficient that shows how well the line is adjusted to the experimental points. At the selected wavelength of 550 nm the combined use of iron oxide in addition to titanium oxide, again with a weight ratio of 225/1, leads to a drastic lowering of the transmittance already at quite low titanium oxide concentrations.

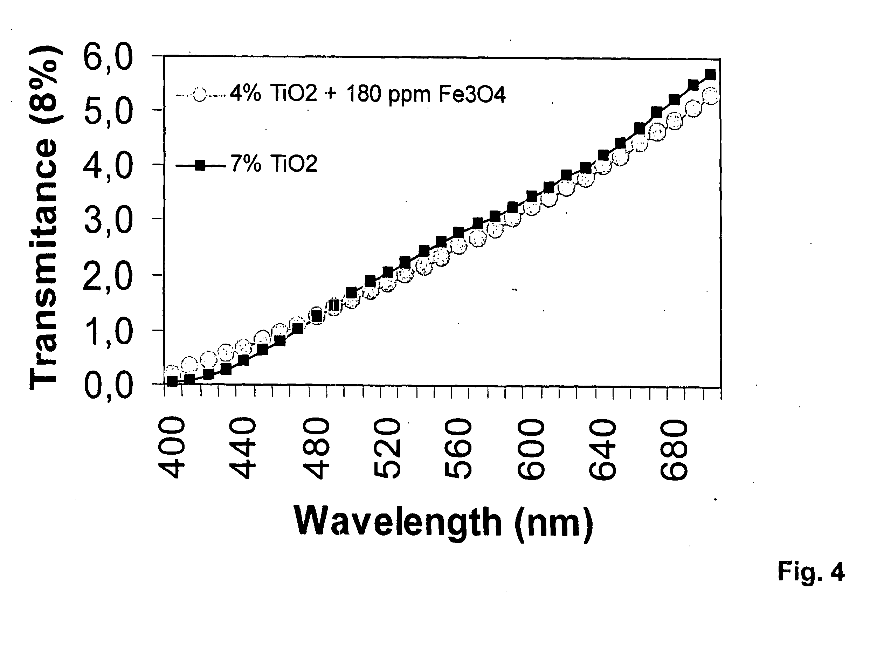

As explained above, the optimization of the different properties of the inventive resin composition can be realized basically irrespective of the absolute contents of titanium oxide and iron oxide, respectively. However, for economic reasons and in order to provide an improved processability, low contents are usually preferred. Due to the synergistic effect of better light-blocking properties and an balanced color as achieved by the combination of titanium oxide and iron oxide in the inventive ratio, it is possible to use quite small amounts of these two pigments, while still achieving superior light-shielding properties, so that costs can be further reduced. This can for example be seen from the graphs as shown in Fig. 4. With the addition of merely 180 ppm iron oxide, which gives a weight ratio of the two pigments of about 222, approximately 43% of the titanium oxide can be saved while still achieving the same results with regard to the transmittance in the wavelength region of 400 to 700 nm.

Apart from the significantly improved light-shielding properties, an improved match between the used pigments and the resin matrix is also observed when titanium oxide and iron oxide are present in the above ratio.

Although the absolute contents of the two essential pigments are not critical, superior results are already achieved at comparably low concentrations of these pigments. In order to achieve a sufficient light reflection, the content of the titanium oxide is preferably ≥2 wt.%. The incorporation of a very large amount of this pigment might, however, deteriorate the mechanical properties of the resin composition and could lead to an inferior compatibility with the resin matrix. Thus, as an upper limit, the content of the titanium oxide is preferably ≤11 wt.%.

Similarly, suitable absorbing properties are already achieved at a very low iron oxide content of ≥0.01 wt.%, due to the interaction with the titanium oxide pigment. High amounts of iron oxide might lead to a reduced whiteness, so that the iron oxide content is preferably not higher than 0.07 wt.%, i.e. preferably ≤0.07 wt.%.

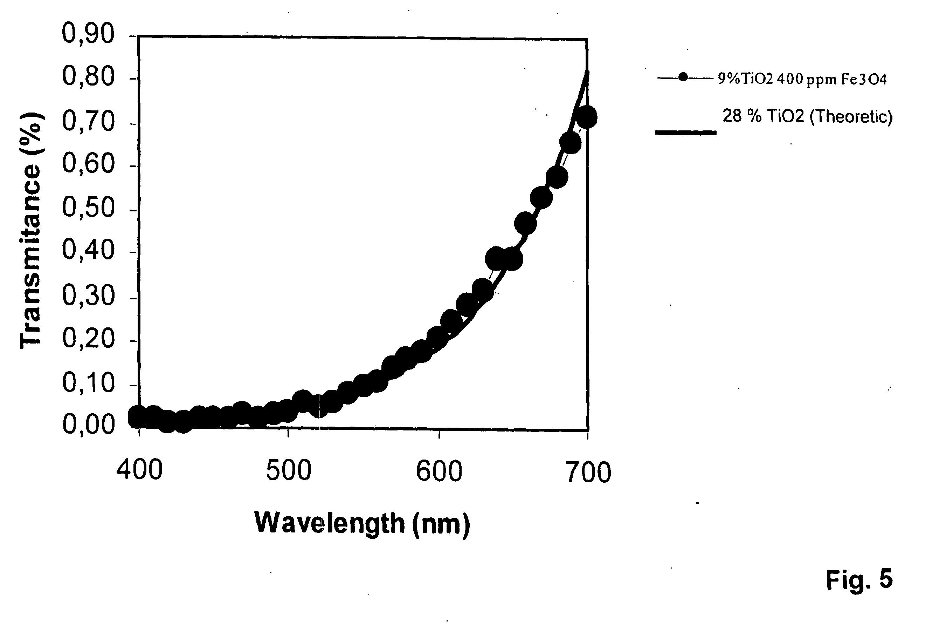

As two specific embodiments, the combination of 9 wt.% titanium oxide with 0.040 to 0.045 wt.% iron oxide, specifically 9 wt.% titanium oxide with 0.040 wt.% iron oxide, and the combination of 3.9 wt.% titanium oxide with 0.0185 wt.% iron oxide shall be mentioned, with PET as the remainder of the respective compositions. In both cases, it is preferred that TiO₂ is used in combination with Fe₃O₄. For the case of 9 wt.% titanium oxide and 0.040 wt.% (400 ppm) iron oxide, Fig. 5 demonstrates that the very small amount of iron oxide used in addition to titanium oxide in a weight ratio of 225 results in the same transmission characteristics as would be achieved by a sample containing more than three times the amount of titanium oxide (since an actual sample with 28 wt.% TiO₂ was not at hand, a theoretical curve was calculated for the latter sample, according to Fig. 3 equation).

Further, due to the beneficial effect of the incorporation of Fe3O4, the composition according to the present invention is substantially free of active carbon, carbon black or free carbon in other forms.

As mentioned above, good light-shielding properties are often required in order to protect packaged food from light-induced deterioration. Therefore, it is preferable that the wall of a container made of the inventive resin composition, e.g. by a blowing technique, exhibits - at a wall thickness of 0.29 mm and at a wavelength of 550 nm - a transmission factor of ≤0.5% of the irradiated light (as measured in the integrated sphere mode). More preferably, the transmission factor is ≤0.4%, still more preferably ≤0.3% and even more preferably ≤0.2%.

Preferred examples of the container made of the resin composition according to the present invention are bottles, cans, barrels, bags and boxes as well as preforms thereof. Preferred are bottles, especially mono-layered bottles, and their preforms.

The containers can be advantageously used for packaging light-sensitive goods, especially food including beverages. Hence, the use of a container comprising the resin composition of the present invention for packaging light-sensitive goods, especially food and beverages like dairy products is advantageous.

Some experiences were run that confirm this good performance. In table 4 it is shown the results obtained with two different containers (1,5 liter): A) a monolayer bottle, 45 grams, 0,29 mm wall thickness, with 9 % of TiO2 and B) a monolayer bottle, 45 grams, 0,29 mm wall thickness, based on the present invention with 9 % of TiO2 plus 400 ppm of Fe3O4. In these experiments, bottles of those compositions were filled with skimmed UHT milk, then stored under forced environmental conditions, climatic chamber at 25 °C and 800 Lux of cool white fluorescent lamp (OSRAM L18W10) Sensorial and chemical analysis were carried our at different storage times. Sensorial test were carried out by a Dairy expert panel that has evaluate the quality of milk from 0 (poor quality) to 10 (best quality). In addition, some analysis of vitamin B2 (Riboflavin) were carried out:

**Table 4**

| | Composition | T 550nm | Sensorial test (5 weeks) | Riboflavin (initial) | Riboflavin (2 weeks) | Riboflavin (5 weeks) |
|---|---|---|---|---|---|---|
| Bot A | 9 % Ti02 | 2, % | 5 | 1500 ppm | 1131 ppm | 662 ppm |
| Bot B | 9 % Ti02+400 ppm Fe | 0,18 % | 8 | 1500 ppm | 1446 ppm | 1286 ppm |

Both, sensorial and analytical results show much better performance in Bottles B. The light barrier imparted by this bottle (Transmittance at 550 nm = 0,18%) efficiently protect organoleptic and nutritional characteristics of UHT milk.

A process comprising the following steps leads to a resin composition which can be further processed with ease to a high-quality preform of a food container and eventually to such a container, especially a bottle, itself:
- esterifying terephthalic acid and ethylene glycol;
- adding titanium oxide and iron oxide;
- polymerizing the resulting reaction mixture;
- pelletizing the polymerized reaction mixture; and
- increasing the molecular weight of the resulting resin in a further SSP process.

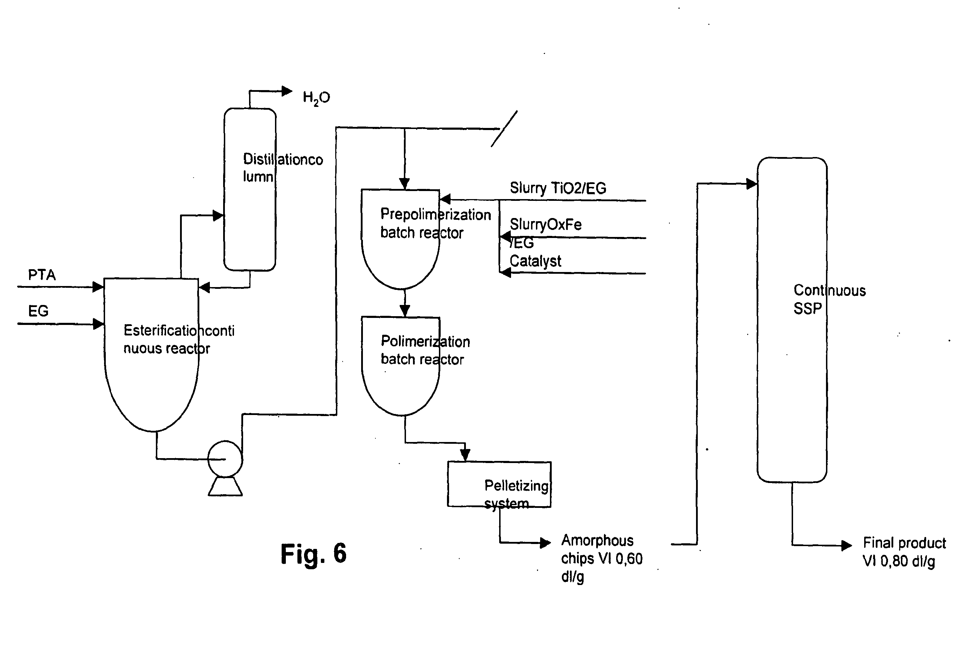

Next, a specific example of the process for the preparation of a resin composition according to the present invention will be described with reference to Fig. 6.

In a first step, terephthalic acid (PTA) and ethylene glycol (EG) are fed into a continuous reactor for an esterification. In this step, the reaction temperature is typically set in the range of 250 to 260°C. The reaction can be carried out under atmospheric pressure. By a distillation column, the generated water is removed from the reaction system.

In a second step, the ester mixture produced in the first step is fed into a batch reactor for a pre-polymerization. To this batch reactor, a slurry of titanium oxide in ethylene glycol, a slurry of iron oxide in ethylene glycol, and a catalyst are added. The production of the two slurries is described below. The reaction temperature in this second step is usually slightly higher than in the first step, e.g. 260 to 270°C, while the atmospheric pressure can be maintained.

It is advantageous to add the pigments and especially the titanium oxide at this stage to the not yet polymerized mixture (a so called grade of polymerization of 4 is usually present at this stage) because the viscosity of the mixture is still very low compared to the viscosity which is reached at the end of the polycondensation process. This makes the dispersing of the pigments, predominantly the larger mass of titanium oxide, in the mixture easier and avoids the formation of agglomerates. Thereby, an optimization of the dispersion of the pigments is achieved.

In an alternative embodiment, the slurry of titanium oxide in ethylene glycol and/or the slurry of iron oxide in ethylene glycol, optionally together with a catalyst, are already added in the first step to the continuous reactor for the esterification as the viscosity of the mixture is similarly low at this stage and also provides for the improved dispersibility of the pigments. However, in the first step terephthalic acid is present, so that the medium is acidic. Its acidity promotes the aggregation of especially the titanium oxide particles, so that the addition of the slurries during the second step as described above is preferred.

In a third step, the reaction mixture obtained in the second step is fed into a further batch reactor where a polymerization is conducted. Here, it is suitable to slightly raise the reaction temperature further, e.g. to a value of 285 to 290°C. Preferably, the reaction is continued in this step under reduced pressure, wherein a vacuum of as low as 1 Torr (133 Pa) can be employed.

In a fourth step, the produced polymerized substance is pelletized in a pelletizing system. By the pelletizing, amorphous chips of the resin composition are obtained which have an intrinsic viscosity (IV) of about 0.60 dl/g.

In a fifth step, the molecular weight of the polymerized resin is further increased by a continuous solid state polycondensation (SSP) process. This process step typically yields a final product with an intrinsic viscosity of about 0.80 dl/g. Typical process parameters are a temperature of 215 to 220° C and atmospheric pressure.

The polymerization process leads to an excellent behavior of the resin composition, indicating additional advantages over other incorporation alternatives like, for example, using mixtures or the master-batch technique. Namely, it is possible to incorporate large amounts of pigments (for example, the above mentioned 9% titanium oxide would be an unusual high concentration for a master-batch addition) with homogeneity and a high dispersion degree, also ensuring the integrity of the molecular chains.

Additional advantages of the described process over the master-batch technique are lower costs and an improved product quality. More specifically, in order to produce a master-batch, a PET polymer is melted in a twin extruder and the pigment is added thereto. Then, the resulting melt is extruded and cut to form the master-batch. When a preform is produced by injection, the master-batch is remelted in the injection machine. On the contrary, when a preform is produced using a polymerization process resin, only one melting is necessary, namely in the injection machine. Thus, additional equipment like an auxiliary dryer and dosing devices, as required for a master-batch, is not necessary.

As regards the quality, the pigment distribution in a container, e.g. a bottle, which is produced by the polymerization process, and the dispersion of titanium oxide are superior to the one in a container obtained from a master-batch. The concentration of the pigment in both, a preform and the final container, is very precise due to its control during the polymerization. Instead, when a master-batch is used for an injection process, a very high pigment concentration is present in the master-batch (typically 50 - 70%), which is blended with standard PET in the injection screw in order to obtain the necessary concentration. The resulting blend is not perfectly homogeneous, and variations in the pigment concentration of preforms produced in one working cycle (e.g. 48; 72; 96, up to 144 pieces) are sometimes noticed. Further, the not uniform distribution of the master-batch in the polymer blend leads to a strong tendency of the final products, especially of final bottles, to exhibit delamination.

While the pigment concentration in preforms according to the polymerization process is precise in a continuous process, small fluctuations in the dosing unit of a master-batch process result in noticeable differences of the pigment concentrations of the preforms over the time. Then, in the subsequent blowing step, it is difficult to control this blowing step since the quality of the preform feed varies. In addition, if a certain level of pigments in the final containers must be guaranteed, it will be necessary to overfeed the master-batch in order to ensure that preforms with less pigment than required are not produced.

Also, the mechanical properties of the final containers are affected by the intrinsic viscosity of the polymer. According to the polymerization process of the present invention, the viscosity is finally set to a value of about 0.80 dl/g. In the injection of a master-batch, a standard resin with a viscosity of typically 0.80 dl/g is blended with a master-batch with a viscosity of typically below 0.60 dl/g. The intrinsic viscosity in the preform and the final container is than lowered and the mechanical properties worsen. (Fig. 9)

Because of the above described advantages, a preform according to the present invention is obtained by injection of a resin obtained by polymerization process, e.g. the polymerization as described hereinbefore.

Further, as can be seen from the described workflow of the production process, one of the characteristics of this process is the incorporation of all required barrier agents (pigments) already in the initial phases of the polymerization process.

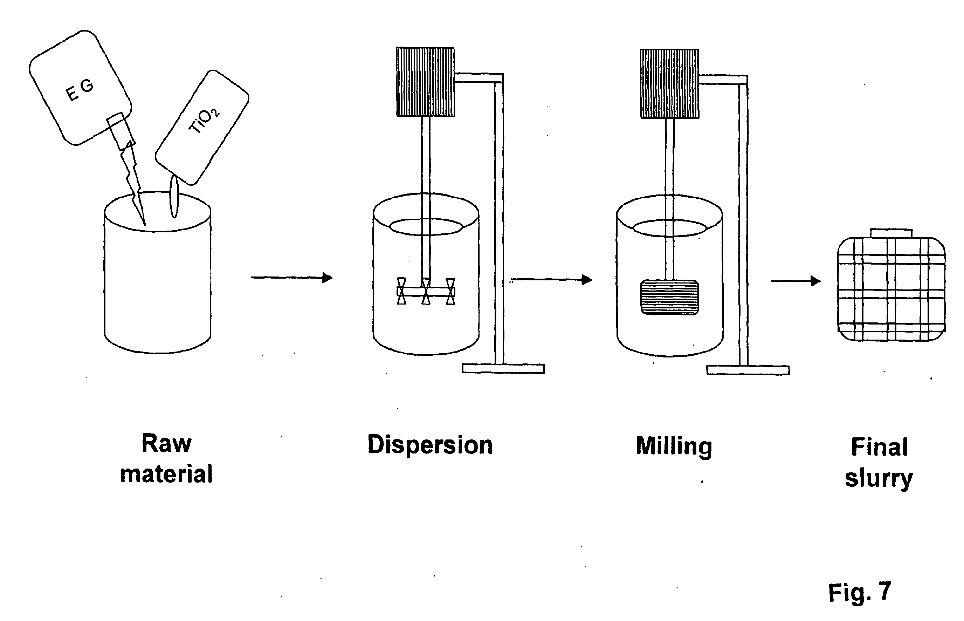

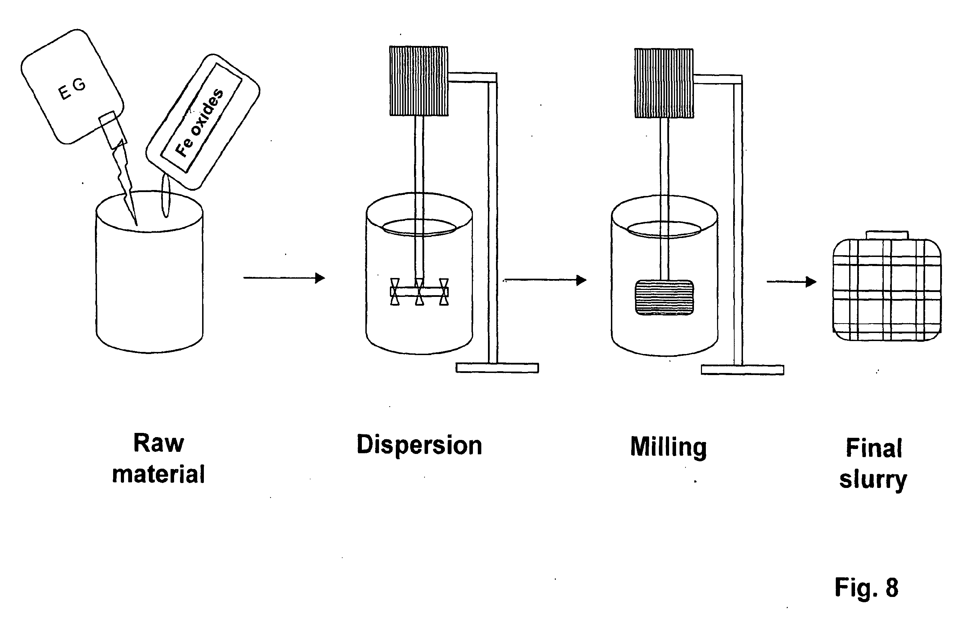

The incorporation of Ti and Fe is made by adding separate suspensions (slurries) of these elements in ethylene glycol in the esterification phase of the process. The preparation of the slurries is depicted in Fig. 7 and 8, respectively. In both cases, the metal oxide and ethylene glycol are mixed. Then, a first dispersing treatment is conducted, whereby slurries of metal oxides with particle sizes of about 5 µm (titanium oxide) or about 10 µm (iron oxide) are obtained.

For an efficient use of the respective pigments and in order to avoid jams in the filters as well as to avoid agglomerates, which can negatively affect the final look, the processability and the final functional capability of the containers, it is preferable to perform a further milling step in which the particle size of the pigments is diminished to about 3 µm and more preferably to below 3 µm, even more preferably to below 1 µm.

## Claims

1. A resin composition comprising polyethylene terephthalate, titanium oxide and iron oxide,
**characterized in that**
the weight ratio of said titanium oxide to said iron oxide is in the range of 150 to 250.

2. The resin composition according to claim 1, wherein the content of said titanium oxide is 2 to 11 weight%, based on the total weight of the composition.

3. The resin composition according to claim 1 or 2,
wherein the content of said iron oxide is 0.01 to 0.07 weight%, based on the total weight of the composition.

4. The resin composition according to any one of claims 1 to 3, wherein said iron oxide is Fe₃O₄.

5. The resin composition according to any one of claims 1 to 4, wherein said resin composition is granular.

6. The resin composition according to any one of claims 1 to 5, which is obtainable by polymerization.

## Patentansprüche

1. Kunstharz-Zusammensetzung aufweisend Polyethylen-Terephthalat, Titanoxid und Eisenoxid,
**dadurch gekennzeichnet, dass**
das Gewichtsverhältnis zwischen dem Titanoxid und dem Eisenoxid in dem Bereich von 150 bis 250 liegt.

2. Kunstharz-Zusammensetzung nach Anspruch 1, wobei der Anteil des Titanoxids 2 bis 11 Gewichts-% beträgt, basierend auf dem Gesamtgewicht der Zusammensetzung.

3. Kunstharz-Zusammensetzung nach Anspruch 1 oder 2, wobei der Anteil des Eisenoxids 0,01 bis 0,07 Gewichts-% beträgt, basierend auf dem Gesamtgewicht der Zusammensetzung.

4. Kunstharz-Zusammensetzung nach einem der Ansprüche 1 bis 3, wobei das Eisenoxid Fe₃O₄ ist.

5. Kunstharz-Zusammensetzung nach einem der Ansprüche 1 bis 4, wobei die Kunstharz-Zusammensetzung granulatförmig ist.

6. Kunstharz-Zusammensetzung nach einem der Ansprüche 1 bis 5, die durch Polymerisation erhältlich ist.

## Revendications

1. Une composition de résine synthétique comprenant du polyéthylène téréphtalate, de l'oxyde de titane et de l'oxyde de fer,
**caractérisée en ce que**
le rapport de poids entre l'oxyde de titane précité et l'oxyde de fer précité se situe dans un intervalle compris entre 150 et 200.

2. La composition de résine synthétique selon la revendication 1, dans laquelle le contenu en oxyde de titane précité représente 2 à 11 % en poids du poids total de la composition.

3. La composition de résine synthétique selon la revendication 1 ou 2, dans laquelle le contenu en oxyde de fer précité représente 0,01 à 0,07% en poids du poids total de la composition.

4. La composition de résine synthétique selon l'une quelconque des revendications 1 à 3 dans laquelle l'oxyde de fer précité est Fe₃O₄.

5. La composition de résine synthétique selon l'une quelconque des revendications 1 à 4 dans laquelle la composition de résine présente une forme granulaire.

6. La composition de résine synthétique selon l'une quelconque des revendications 1 à 5 obtenue par polymérisation.
